# EUROPÄISCHE PATENTSCHRIFT

(11) **EP 0 534 221 B1**
(45) Veröffentlichungstag und Bekanntmachung des Hinweises auf die Patenterteilung: **11.12.1996**
(21) Anmeldenummer: 92115288.0
(22) Anmeldetag: 07.09.1992
(51) Int. Cl.: G05B 13/04, G05B 13/02, B21B 37/00, G06F 15/18

(54) **Regelparameter-Verbesserungsverfahren für industrielle Anlagen**
Control parameter improvement method for industrial installations
Dispositif d'amélioration avec paramètre de réglage pour installation industrielles

(30) Priorität: 24.09.1991 DE 4131765
(43) Veröffentlichungstag der Anmeldung: 31.03.1993
(73) Patentinhaber: SIEMENS AKTIENGESELLSCHAFT, 80333 München (DE)
(72) Erfinder: Hofmann, Reimar, W-8000 München 40 (DE); Schmid, Friedemann, Dr., W-8520 Erlangen (DE); Röscheisen, Martin, W-8032 Gräfelfing (DE); Rein, Rolf-Martin, W-8500 Nürnberg 30 (DE); Tresp, Volker, Dr., W-8000 München 22 (DE)

(56) Entgegenhaltungen:
- WO-A-90/10270
- WO-A-91/10961
- DE-A- 4 008 510
- DE-A- 4 040 360
- PATENT ABSTRACTS OF JAPAN, unexamined applications, P Sektion, Band 15, Nr. 136, 04. April 1991 THE PATENT OFFICE JAPANESE GOVERNMENT Seite 71 P 1187
- PATENT ABSTRACTS OF JAPAN, unexamined applications, P Sektion, Band 15, Nr. 71, 19. Februar 1991 THE PATENT OFFICE JAPANESE GOVERNMENT Seite 25 P 1168
- PATENT ABSTRACTS OF JAPAN, unexamined applications, P Sektion, Band 15, Nr. 278, 15. Juli 1991 THE PATENT OFFICE JAPANESE GOVERNMENT Seite 149 P 1227
- Proceedings of the 1987 Ameri can Control Conference, June/1987, Minneapolis, USA, S.1662-1668
- International Joint Conference on Neural Networks, July/1991, Seattle, USA, S.II-701/707

## Beschreibung

Die Erfindung betrifft ein Verfahren zur Verbesserung regeltechnisch wichtiger Parameter in einer industriellen Anlage der Grundstoffindustrie, z.B. in einem Walzwerk, wobei die Parameter in Betriebspunkten vorab anhand von Modellen, z.B. Algorithmen, errechnet und dann durch Adaption den tatsächlichen Größen in den Betriebspunkten angepaßt werden.

Eine dem Vorstehenden entsprechende Regelung ist z.B. für mehrgerüstige Walzwerke aus der DE 40 40 360 Al bekannt. Die bekannte Regelung, die nicht nur im Walzwerksbereich, sondern für beliebige industrielle Prozesse angewendet werden kann, arbeitet bereits sehr genau. Ihre Genauigkeit ist jedoch stark von der Güte abhängig, mit der die tatsächlichen Prozeßgrößen ermittelt werden können. Häufig ergeben sich nicht einzelne Werte für die Prozeßgrößen, sondern Wertebereiche, deren Ausbildung von den verschiedensten Einflüssen abhängt.

Es ist Aufgabe der Erfindung, das obengenannte, bereits gut funktionierende Regelverfahren ergänzend zu verbessern, wobei insbesondere die Abhängigkeiten und Verknüpfungen in einem Produktionsprozeß berücksichtigt werden sollen.

Die Aufgabe wird durch die Merkmale des Anspruchs 1 gelöst.

Regel-Techniken mit Verarbeitung unscharf bestimmter Eingangsgrößen sind bereits in vielfältiger Ausgestaltung bekannt, so für den Walzwerksbereich z.B. aus der DE-40 08 510 A1, die mit den Aussagen eines Expertensystems und nachfolgender Fuzzyfizierung dieser Aussagen und der anschließenden Verarbeitung durch einen Neurocomputer arbeitet. Eine derartige Regelung enthält erhebliche Risiken bezüglich der Betriebssicherheit und erfordert einen großen Entwicklungsaufwand mit langer Erprobungszeit. Es ist eine weitere Aufgabe der Erfindung, anzugeben, wie eine bestehende Regelung mit der Technik des Regelns mit unscharf bestimmten Eingangsgrößen relativ einfach und ohne Verlust von Betriebssicherheit noch verbessert werden kann.

In Ausgestaltung der Erfindung ist dabei vorgesehen, daß zur Betriebs-Parameter-Verbesserung in Optimierungseinheiten, insbesondere unter Berücksichtigung von Expertenwissen über die Prozeßgrößen-Meßwertstreuung und -Verteilung, ein neuronal aufgebautes Netz verwendet wird. Durch ein neuronal aufgebautes Netz, das entweder hardwaremäßig oder softwaremäßig realisiert werden kann, ist eine kostengünstige, schnelle, und insbesondere durch Computersimulation überprüfbare Realisierung der erfindungsgemäßen Verbesserung der bekannten auf Modellen beruhenden Regelung möglich.

Neuro-Computer und/oder ihre Softwarestruktur sind bereits in vielfältiger Form bekannt, so aus der bereits genannten DE-40 08 510 A1, aber auch aus einschlägigen Fachaufsätzen, z.B. aus dem Aufsatz "Networks for Approximation and Learning", Proceedings of The IEEE, Vol.78, No. 9, Sept. 1990 oder aus dem Aufsatz "Fast Learning in Networks of Locally- Tuned Processing Units", Neural Computation 1, Seiten 281 bis 294, Massachusetts Institute of Technology, 1989. In diesen Aufsätzen werden gleichzeitig Selbstlernmöglichkeiten neuronaler Netze beschrieben, die es erlauben, die tatsächlichen Verhältnisse in einer Anlage in bisher nicht möglicher Art regelungstechnisch zu berücksichtigen.

In weiterer Ausgestaltung der Erfindung ist vorgesehen, daß das neuronale Netz die jeweiligen Ergebnisse der vorbekannten Regelung gewichtet berücksichtigt. So ist sehr vorteilhaft sichergestellt, daß das Ergebnis der Regelung eines industriellen Prozesses durch das neuronale Netz insoweit beeinflußt wird, wie es nach dem Entwicklungsstand vertretbar ist. Die Sicherheit der Regelung von industriellen Prozessen, die insbesondere im Walzwerksbereich mit den heutigen hohen Walzgeschwindigkeiten und der Folge von erheblichen Betriebsstörungen bei Fehlregelungen, von erheblicher Bedeutung ist, braucht sich nicht zu vermindern. Das Risiko bei der Einführung der neuen Regelungstechnik kann durch eine geringe Gewichtung der verbesserten Größen zunächst klein gehalten werden.

Es ist weiterhin vorgesehen, daß als neuronales Netz ein mehrlagiges, insbesondere zweilagiges, feed-forward-Netz mit lokal abgestimmten Netzteilen verwendet wird. Ein derartiges, einfaches Netz hat sich als besonders effektiv erwiesen und erfordert zudem keinen sehr hohen Rechenaufwand. Die Optimierung kann daher auf relativ kleinen Rechnern erfolgen, z.B. auf einer Workstation des Typs Sun 4. Die spätere Einbindung in einen Prozeßrechner ist problemlos möglich.

Bei Durchführung des Verfahrens ist vorgesehen, daß die lokale Abstimmung durch eine Verteilungs- und Streuungsberücksichtigung der gemessenen Größen, z.B. in Gaußkurven, erfolgt. Die Verteilungsberücksichtigung wird ebenso wie die Aktivitätsberücksichtigung durch Lernschritte laufend verbessert, so daß sich insgesamt ein gutes Selbstlernverhalten ergibt.

Zur betriebssicheren Einführung des erfindungsgemäßen Verfahrens ist die Datenaufbereitung für die gemessenen Größen besonders wichtig. Vorteilhaft ist insbesondere eine Meßwertaufbereitung mit prozeßabhängigen Vertrauensintervallen und Standardabweichungen. Hierdurch kann die Technik der jeweiligen Anlagen berücksichtigt werden und "Ausreißer", die auf Meßfehler etc. zurückgehen, bleiben unberücksichtigt. Die sorgfältige, gezielte Meßwertaufbereitung ist ein wesentlicher erfindungsgemäßer Faktor, da hierdurch Expertenwissen in die Regelung eingeht. Unwahrscheinliche Werte werden ausgeschieden und nur gering zu berücksichtigende Werte entsprechend berücksichtigt. Die Größen, die sich aus den Messungen des tatsächlichen Prozesses ergeben, unterliegen also einer mehrfachen Gewichtung; einmal vor Eingang in das neuronale Netzwerk und einmal in diesem; hierdurch wird eine bisher nicht erreichbare, den bekannten Stand der Technik bezüglich der Genauigkeit erheblich übersteigende Regelung erreicht.

Die Erfindung wird im Beispiel einer Walzwerksregelung anhand von Zeichnungen näher erläutert, aus denen ebenso wie aus den Unteransprüchen weitere Einzelheiten hervorgehen. Im einzelnen zeigen:
- FIG 1: die Verteilung von Einflußgrößen und verwendete Modelle bei einem Walzprozeß,
- FIG 2: das rechentechnische Vorgehen bei einer bekannten Walzprozeßregelung,
- FIG 3 und 4: beispielhafte Ausbildungen eines Neuro-Computernetzwerkes, und
- FIG 5 und 6: die Gewichtung von Gaußkurven.

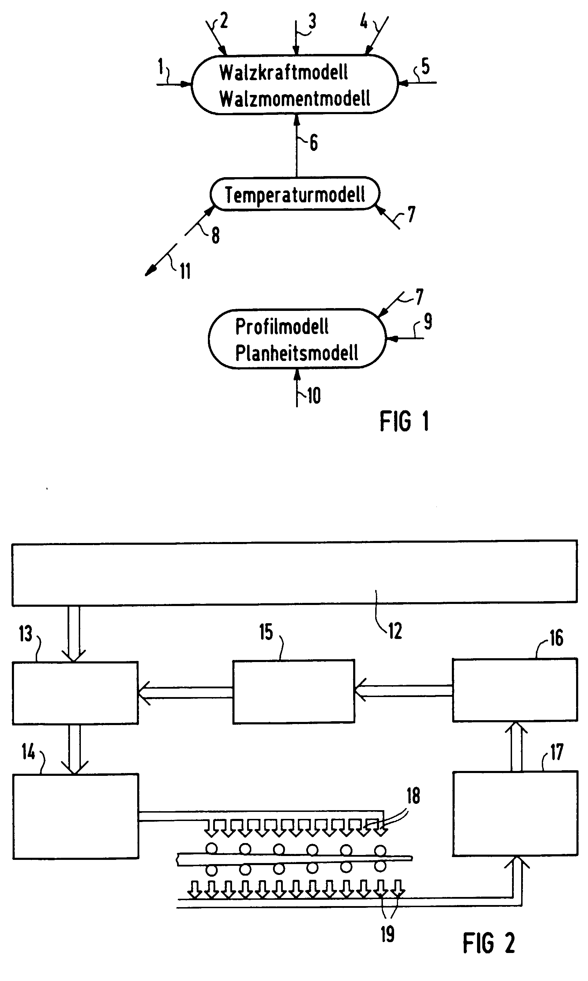

In FIG 1, die die Einflußgrößen auf die einzelnen Modelle für die Errechnung der Betriebsparameter zeigt, bezeichnet Pfeil 1 die Eingabe der Banddicke, Pfeil 2 die Eingabe der relativen Abnahme je Gerüst, Pfeil 3 den Axialzug, Pfeil 4 die Bandbreite und Pfeil 5 die Eingabe der Arbeitswalzendurchmesser. Zusammen mit der Größe entsprechend Pfeil 6 aus dem Temperaturmodell werden durch die Modelle für die Walzkraft und das Walzmoment die Beriebsparameter errechnet.

In das Temperaturmodell gehen der Einfluß der Kühlung entsprechend Pfeil 7 und die Walzgeschwindigkeit entsprechend Pfeil 8 unter Berücksichtigung der Voreilung entsprechend Pfeil 11 ein.

Die Kühlung entsprechend Pfeil 7 beeinflußt auch das Profilmodell und das Planheitsmodell, in das auch die Zugverteilung entsprechend Pfeil 9 und der Walzenverschleiß sowie die thermische Walzenbombierung (thermic crown) eingehen. Aus FIG 1 ergeben sich die grundsätzlichen Zusammenhänge zwischen den einzelnen Modellen zur Berechnung der Betriebsparameter eines Walzwerkes, insbesondere eines Kaltwalzwerkes. Entsprechende Modelle sind für die meisten industriellen Anlagen bekannt und ihre Ergebnisse können in der Regel erfindungsgemäß verbessert werden.

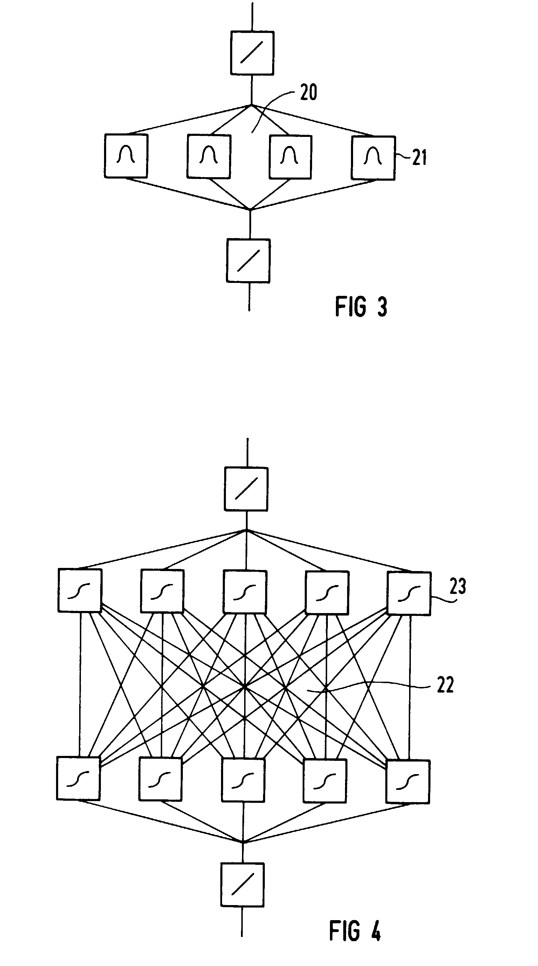

In FIG 2, die die einzelnen Blöcke der Regelung eines Walzwerkes darstellt, bezeichnet 12 die Primärdateneingabe, z.B. die Eingangsabmessungen, die Materialqualität und die Zielgrößen des Walzprozesses. Die Primärdaten werden regeltechnisch passend aufbereitet und der Vorausberechnung 13 aufgegeben, die die walztechnischen Größen und die Einstellwerte für die Walzstraße berechnet. Aus der Vorausberechnung 13 gelangen die Daten in die zeitrichtige Verteilung 14 für die Einstellwerte der unterlagerten Steuerungen und Regelungen 18 der schematisch dargestellten Walzstraße. An der Walzstraße selbst werden durch bekannte Sensoren 19 aller Art, z.B. für die elektrischen Größen an den einzelnen Walzgerüsten und für den Bandzustand zwischen den Gerüsten und hinter dem letzten Gerüst, Meßwerte und Anlagensignale gewonnen, die der Meßwerterfassung 17 mit statistischer Aufbereitung der Meßwerte eingegeben werden. Für die statistische Aufbereitung wird ein Vertrauensbereich und die Standardabweichung unter Berücksichtigung der Anlagenverhältnisse und der Verstärkung des gebildeten Feedbackkreises festgelegt, Dieser sichert sich über die Nachberechnung und Anpassung der Adaptionskoeffizienten 16 sowie 15 zur Speicherung der Adaptionskoeffizienten und den Vorausberechnungsblock 13 geschlossen. Dieser Feedbackkreis wird erfindungsgemäß durch die Technik des Regelns mit unscharf bestimmten Eingangsgrößen, insbesondere durch neuronale Netze, wie sie in FIG 3 beispielhaft gezeigt werden, verbessert. Dabei wird ein neues Selbstlernverhalten des Feedbackkreises erreicht, das zu einer erheblichen Verbesserung des walztechnischen Ergebnisses führt.

In FIG 3 bezeichnet 20 ein einfaches, für stark streuende Werte gut geeignetes neuronales Netz, wobei die Netzknoten 21 wie angedeutet, eine lokale Beeinflussung entsprechend Gaußkurven aufweisen. Netzwerke nach Fig. 4 weisen Netzknoten 23 im neuronalen Netz 22 auf, die sigmoidal beeinflußt sind. Derartige Netze sind für die Regelung und Verbesserung von Prozessen mit weniger stark streuenden Meßwerten und Eingangsgrößen ebenfalls, aber weniger gut geeignet.

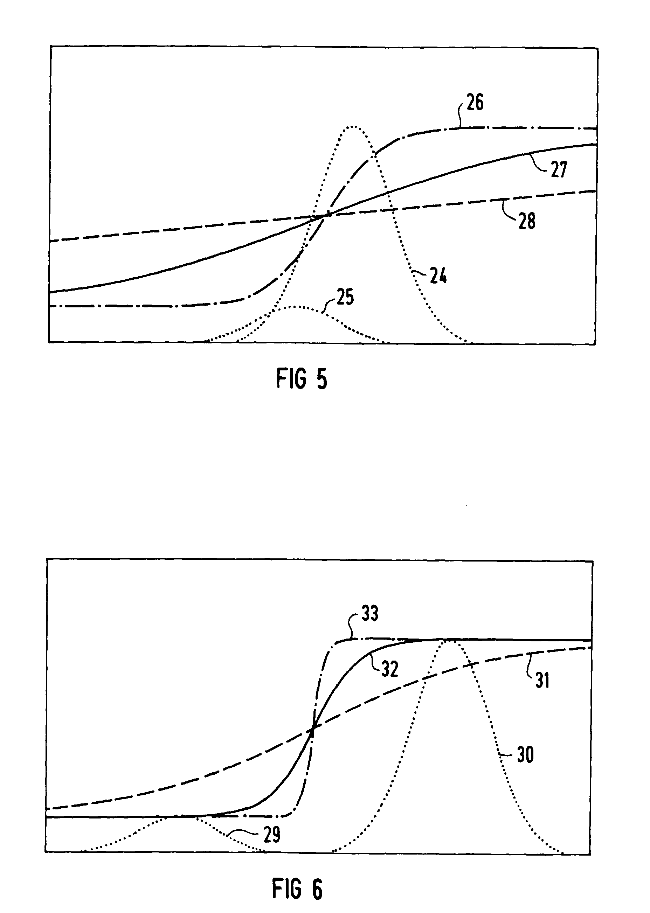

Die FIG 5 zeigt schließlich zwei gepunktet ausgeführte Gaußkurven, die sich teilweise überlagern, während sie in FIG 6 nebeneinanderliegen. Die Ausgangsfunktionen für ihre Gewichtung ergeben sich bei einer Standardabweichung 1 in Form der strichpunktierten Linien 26 bzw. 33, für die Standardabweichung 2 als durchgezogene Linien 27 bzw. 32 und für die Standardabweichung 4 als strichlierten Linie 28 bzw. 31. Wie ersichtlich, ergibt sich anhand der Standardabweichung eine signifikante Abweichung der Beeinflussung der lokalen Einheiten. Dies ergibt zusammen mit der Normierung, wie sie in dem Artikel "Fast Learning in Networks of Locally-Tuned Processing Units" beschrieben ist, die gewünschten Ausgangsfunktionen. Zusammen mit der Wahl der Standardabweichung und des Vertrauensbereiches bei der Meßdatenaufbereitung im Block 17 von FIG 2 ergibt sich somit eine doppelte Berücksichtigung der Meßwertstreuung und damit ein stabiles Regelungsverhalten auch bei sehr stark verteilten Meßwerten.

Das erfindungsgemäße Verfahren ist anhand einer Walzwerksregelung, insbesondere der Regelung eines Kaltwalzwerkes, näher erläutert. Es versteht sich jedoch, daß diese Regelung ebenso für die Regelung von Warmwalzwerken sowie von allen industriellen Prozessen schnell ablaufender Einzelvorgänge, die miteinander verknüpft sind, sowie prinzipiell auch für langsam ablaufende industrielle Prozesse mit unscharfen Meßwerten sowie nicht algorithmisch erfaßt ablaufenden Vorgängen angewendet werden kann.

## Patentansprüche

1. Verfahren zur Verbesserung von Betriebsparametern in einer industriellen Anlage der Grundstoffindustrie, z. B. in einem Walzwerk, wobei die Betriebsparameter in Betriebspunkten vorab anhand von Modellen, z. B. Algorithmen, errechnet und dann durch Adaption den tatsächlichen Größen in den Betriebspunkten angepaßt werden, und wobei die Verbesserung der Betriebsparameter mittels einer auf neuronalen Netzes basierenden Informationsverarbeitung erfolgt, deren Eingangsgrößen, unter Berücksichtigung von Expertenwissen in bezug auf die auftretenden Prozeßgrößen-Meßwertstreuung und Verteilung aufbereitet werden.

2. Betriebsparameter-Verbesserungsverfahren nach Anspruch 1,
**dadurch gekennzeichnet**,
daß die auf neuronalen Netzen basierende Informationsverarbeitung die jeweiligen Ergebnisse der vorbekannten Regelung gewichtet berücksichtigt.

3. Betriebsparameter-Verbesserungsverfahren nach Anspruch 2,
**dadurch gekennzeichnet,**
daß die Wichtung bei größerer Betriebserfahrung zugunsten der Ergebnisse der Verbesserungsberechnungen erhöht wird.

4. Betriebsparameter-Verbesserungsverfahren nach Anspruch 1, 2 oder 3,
**dadurch gekennzeichnet,**
daß als neuronales Netz ein mehrlagiges, insbesondere zweilagiges, feed-forward-Netz mit lokal abgestimmten Netzteilen verwendet wird.

5. Betriebsparameter-Verbesserungsverfahren nach Anspruch 4,
**dadurch gekennzeichnet,**
daß die lokale Abstimmung durch eine Verteilungs- und Streuungsberücksichtiqung der gemessenen Größen, z. B. in Gaußkurven, erfolgt.

6. Betriebsparameter-Verbesserungsverfahren nach Anspruch 4 oder 5,
**dadurch gekennzeichnet,**
daß die Verteilungsberücksichtigung unter Approximation mehrerer Gaußkurven, unterschiedlicher Varianz erfolgt.

7. Betriebsparameter-Verbesserungsverfahren nach Anspruch 4, 5 oder 6,
**dadurch gekennzeichnet,**
daß die Verteilungsberücksichtigung durch Lernschritte laufend verbessert wird.

8. Betriebsparameter-Verbesserungsverfahren nach einem oder mehreren der vorhergehenden Ansprüche,
**dadurch gekennzeichnet,**
daß es eine Meßwertaufbereitung mit prozeßabhängigen, vorzugsweise aufgrund von Expertenwissen bestimmten Regeln, insbesondere in bezug auf die Vertrauensintervalle und die Standardabweichung, aufweist.

## Claims

1. Method for improving operating parameters in an industrial installation of basic industry, for example in a rolling mill, wherein the operating parameters in working points are calculated beforehand with the aid of models, for example algorithms, and are then matched to the actual variables in the working points by adaptation, and wherein the improvement of the operating parameters takes place by means of information processing based on neuronal networks, the input variables of which information processing are conditioned taking into account expert knowledge in respect of the scattering and distribution of process variables and measured values that occurs.

2. Operating-parameter improvement method according to claim 1, characterised in that the information processing based on neuronal networks takes into account in a weighted manner the respective results of the previously known automatic control.

3. Operating-parameter improvement method according to claim 2, characterised in that in the case of comparatively great operational experience, the weighting is increased in favour of the results of the improvement calculations.

4. Operating-parameter improvement method according to claim 1, 2 or 3, characterised in that a multiple-layer, in particular two-layer, feed-forward-network having locally tuned power supply units is used as a neuronal network.

5. Operating-parameter improvement method according to claim 4, characterised in that the local tuning is carried out by a distribution consideration and scattering consideration of the measured variables, for example in Gaussian curves.

6. Operating-parameter improvement method according to claim 4 or 5, characterised in that the distribution consideration takes place with approximation of a plurality of Gaussian curves which have different variance.

7. Operating-parameter improvement method according to claim 4, 5 or 6, characterised in that the distribution consideration is continuously improved by learning steps.

8. Operating-parameter improvement method according to one or more of the preceding claims, characterised in that the method has a measured-value conditioning having process-dependent rules which are preferably determined on the basis of expert knowledge, in particular in relation to the confidence intervals and the standard deviation.

## Revendications

1. Procédé pour améliorer des paramètres de fonctionnement dans une installation industrielle de l'industrie des matières premières, par exemple dans un laminoir, dans lequel on calcule les paramètres de fonctionnement pour des points de fonctionnement, au préalable au moyen de modèles, par exemple d'algorithmes, puis on les ajuste en adoptant les grandeurs effectives aux points de fonctionnement et dans lequel on améliore les paramètres de fonctionnement par un traitement de l'information se basant sur un réseau neuronal, dont on prépare les grandeurs d'entrée en tenant compte de systèmes experts se rapportant à la dispersion et à la distribution des valeurs de mesure des grandeurs du processus.

2. Procédé pour améliorer des paramètres de fonctionnement suivant la revendication 1,
caractérisé en ce que le traitement des informations se basant sur des réseaux neuronaux tient compte de manière pondérée des résultats de la régulation connue au préalable.

3. Procédé pour améliorer des paramètres de fonctionnement suivant la revendication 2,
caractérisé en ce que l'on augmente la pondération en faveur des résultats des calculs faits pour l'amélioration, au fur et à mesure que l'apprentissage du fonctionnement s'améliore.

4. Procédé pour améliorer des paramètres de fonctionnement suivant la revendication 1, 2 ou 3,
caractérisé en ce que
on utilise comme réseau neuronal un réseau feed-forward à plusieurs couches, notamment à deux couches et ayant des parties de réseau raccordées localement.

5. Procédé pour améliorer des paramètres de fonctionnement suivant la revendication 4,
caractérisé en ce que l'on effectue l'accord local en tenant compte de la distribution et des dispersions des grandeurs mesurées par exemple en courbes de Gauss.

6. Procédé pour améliorer des paramètres de fonctionnement suivant la revendication 4 ou 5,
caractérisé en ce que,
on tient compte de la distribution en faisant l'approximation de plusieurs courbes de Gauss de variantes différentes.

7. Procédé pour améliorer les paramètres de fonctionnement suivant la revendication 4, 5 ou 6,
caractérisé en ce que
on améliore en continu la prise en compte de la distribution par des étapes d'apprentissage.

8. Procédé pour améliorer les paramètres de fonctionnement suivant l'une ou plusieurs des revendications précédentes,
caractérisé en ce que
il comporte une préparation de valeur de mesure avec des règles dépendant du processus et déterminées de préférence sur la base des connaissances de systèmes-experts notamment en ce qui concerne les intervalles de confiance et l'écart type.
